# FASCICULE DE BREVET EUROPEEN

(11) **EP 2 629 385 B1**
(45) Date de publication et mention de la délivrance du brevet: **08.04.2015**
(21) Numéro de dépôt: 13155541.9
(22) Date de dépôt: 15.02.2013
(51) Int. Cl.: H02H 7/16, H02H 3/08, H01G 11/16, H01G 11/14

(54) **Chaîne de stockage d'énergie pour véhicule, comprenant au moins un module de supercondensateurs, système de stockage d'énergie comprenant une telle chaîne et véhicule ferroviaire comprenant un tel système**
Energiespeicherkette für Fahrzeug, die mindestens ein Modul mit Superkondensatoren umfasst, Energiespeichersystem, das eine solche Kette umfasst, und Schienenfahrzeug, das ein solches System umfasst
Energy storage chain for a vehicle, including at least one ultracapacitor module, energy storage system including such a chain and railway vehicle including such a system

(30) Priorité: 16.02.2012 FR 1251443
(43) Date de publication de la demande: 21.08.2013
(73) Titulaire: ALSTOM Transport Technologies, 92300 Levallois-Perret (FR)
(72) Inventeur: Bellomo, Jean Philippe, 65800 AUREILHAN (FR)
(74) Mandataire: Blot, Philippe Robert Emile

(56) Documents cités:
- EP-A1- 2 407 983
- DE-A1-102005 018 339
- US-A1- 2007 002 518

## Description

La présente invention concerne une chaîne de stockage d'énergie pour véhicule, comprenant :
- une carcasse métallique,
- un système de stockage électrique fixé mécaniquement dans la carcasse métallique, et comprenant au moins un module de supercondensateurs, le ou chaque module comportant une enveloppe métallique et une pluralité de supercondensateurs reliés entre eux en série et disposés dans l'enveloppe métallique,
- au moins un dispositif de protection électrique propre à ouvrir un circuit électrique.

Une telle chaîne de stockage d'énergie est notamment propre à récupérer et à stocker l'énergie de freinage de véhicules, en particulier de véhicules ferroviaires circulant sur un réseau. Elle peut être installée à demeure en un point fixe du réseau ou embarquée sur un des véhicules ferroviaires, l'énergie étant dans les deux cas stockée au sein des supercondensateurs du ou de chaque module de la chaîne.

On connaît des documents EP 2 407 983 A1, DE 10 2005 018339 A1, et US2007/002518 A1 une chaîne de stockage d'énergie pour véhicule, cette chaîne de stockage comportant des supercondensateurs.

Il est fréquent qu'une telle chaîne de stockage comporte un réseau de modules de supercondensateurs connectés en série, afin d'obtenir une réserve d'énergie importante pour le véhicule ferroviaire. Lorsque la chaîne de stockage est embarquée sur un véhicule, le potentiel le plus faible du réseau de modules est relié à la masse mécanique du véhicule. De ce fait, il existe une tension importante entre la masse électrique du véhicule et les éléments internes des modules les plus éloignés de la masse mécanique, qui présentent un potentiel électrique élevé, par exemple sensiblement égal à 400V. En effet, lorsque l'enveloppe des modules est métallique, chacun des modules étant fixé mécaniquement à la masse mécanique, la tension entre cette enveloppe métallique, présentant un potentiel électrique à la masse, et les cellules internes du module, est élevée. Cette haute tension n'entraîne cependant pas de circulation de courants élevés dans les modules, susceptibles d'endommager ces derniers, car un tapis isolant est disposé entre l'enveloppe de chaque module et les éléments internes au module.

Toutefois, en cas de défaillance de l'isolation interne d'un module de supercondensateurs, il se produit un court-circuit à la masse avec un courant très élevé qui est susceptible d'entrainer la destruction complète du module ainsi qu'un dégagement gazeux dangereux voire toxique dans l'environnement proche du module. Ce dégagement gazeux est du à la présence d'électrolyte à l'intérieur des supercondensateurs, l'électrolyte se volatilisant lorsqu'un courant traverse l'enveloppe du module, lors d'un percement par exemple.

Un des buts de l'invention est de proposer une chaîne de stockage d'énergie pour véhicule permettant, en cas d'apparition d'un défaut d'isolation interne d'un des modules de supercondensateurs de la chaîne, de limiter le courant de court-circuit et l'élévation en température de la chaîne consécutive, et d'éviter ainsi tout dégagement de gaz dangereux à proximité.

A cet effet, l'invention a pour objet une chaîne de stockage d'énergie pour véhicule du type précité, caractérisée en ce que le dispositif de protection électrique relie à une masse électrique un élément parmi la carcasse métallique ou le module de supercondensateurs.

Suivant d'autres modes de réalisation, la chaîne de stockage d'énergie pour véhicule comprend une ou plusieurs des caractéristiques suivantes, prise(s) isolément ou suivant toutes les combinaisons techniquement possibles :
- le système de stockage électrique comporte au moins deux modules de supercondensateurs connectés en série ;
- le ou chaque dispositif de protection électrique comporte un fusible ;
- la chaîne de stockage d'énergie comporte en outre au moins un organe de détection d'ouverture de circuit électrique ;
- le ou chaque organe de détection d'ouverture de circuit électrique comporte un détecteur à tension de seuil, connecté électriquement en parallèle d'un fusible ;
- le ou chaque détecteur à tension de seuil comporte un organe de commutation à isolement galvanique ;
- le ou chaque fusible est un fusible à percuteur et le ou chaque organe de détection d'ouverture de circuit électrique comporte un interrupteur, ledit interrupteur étant relié mécaniquement à un fusible à percuteur.

L'invention a également pour objet un système de stockage d'énergie pour véhicule comprenant un organe de sectionnement haute tension, caractérisé en ce qu'il comprend en outre une chaîne de stockage d'énergie telle que décrite précédemment, reliée à l'organe de sectionnement haute tension.

L'invention a également pour objet un véhicule ferroviaire, caractérisé en ce qu'il comprend un système de stockage d'énergie tel que décrit précédemment.

L'invention sera mieux comprise à la lecture de la description qui va suivre, donnée uniquement à titre d'exemple et faite en se référant aux dessins annexés, sur lesquels :
- la figure 1 est une vue schématique d'un système de stockage d'énergie selon un premier mode de réalisation de l'invention, comportant trois modules de supercondensateurs ;
- la figure 2 est un schéma électrique d'un des modules de supercondensateurs du système de stockage d'énergie de la figure 1 ;
- la figure 3 est une vue schématique d'un système de stockage d'énergie selon un deuxième mode de réalisation de l'invention ;
- la figure 4 est une vue schématique d'un système de stockage d'énergie selon un troisième mode de réalisation de l'invention ; et
- la figure 5 est une vue schématique d'un système de stockage d'énergie selon un quatrième mode de réalisation de l'invention.

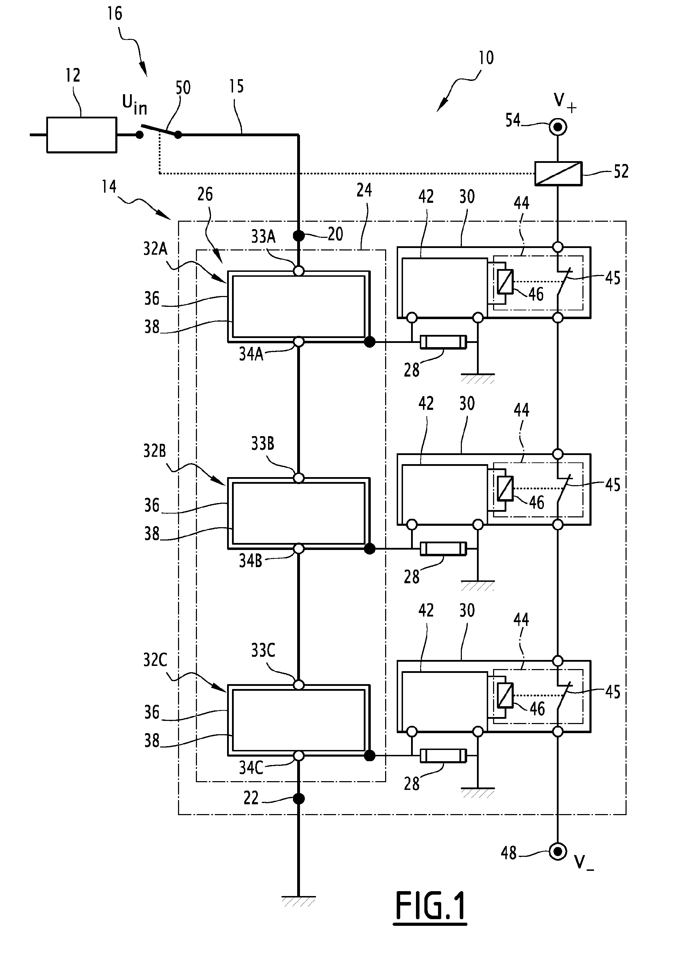

Sur la figure 1, un système de stockage d'énergie 10, installé à bord d'un véhicule ferroviaire, est relié à un convertisseur de puissance 12. Le convertisseur de puissance 12 est par exemple un hacheur de tension installé à bord du véhicule ferroviaire et propre à être relié à une caténaire. Le hacheur de tension 12 est notamment propre à abaisser la tension du courant circulant dans la caténaire pour délivrer une tension nominale d'utilisation Uin continue, applicable en entrée du système de stockage d'énergie 10. La tension Uin présente une valeur par exemple sensiblement égale à 400V.

Le système de stockage d'énergie 10 comporte une chaîne de stockage d'énergie 14 selon l'invention et un connecteur électrique 15 reliant le hacheur de tension 12 à la chaîne 14. Il comporte en outre un organe de sectionnement haute tension 16, par exemple un disjoncteur, connecté au hacheur 12 et relié à la chaîne 14 via le connecteur électrique 15.

La chaîne de stockage d'énergie 14 comporte une borne d'entrée 20 propre à recevoir la tension d'entrée Uin, une borne de sortie 22 reliée à une masse électrique, une carcasse métallique 24 et un système de stockage électrique 26 fixé mécaniquement dans la carcasse métallique 24. La chaîne 14 comporte en outre trois dispositifs de protection électrique 28, et trois organes 30 de détection d'ouverture de circuit électrique, reliés chacun d'une part à un dispositif 28 et d'autre part au disjoncteur 16. Dans l'exemple de réalisation, chaque dispositif de protection électrique 28 est un fusible et chaque organe 30 de détection d'ouverture de circuit électrique est un détecteur à tension de seuil.

Le système de stockage électrique 26 est relié d'une part à la borne d'entrée 20 et d'autre part à la borne de sortie 22. Il comporte un premier module de supercondensateurs 32A, un deuxième module de supercondensateurs 32B et un troisième module de supercondensateurs 32C. Les trois modules de supercondensateurs 32A, 32B, 32C sont reliés en série dans cet ordre.

Chaque module de supercondensateurs 32A, 32B, respectivement 32C comporte une borne d'entrée 33A, 33B, respectivement 33C, et une borne de sortie 34A, 34C, respectivement 34C. Chaque module de supercondensateurs 32A, 32B, respectivement 32C comporte en outre une enveloppe métallique 36 et un tapis isolant 38 disposé dans l'enveloppe métallique 36.

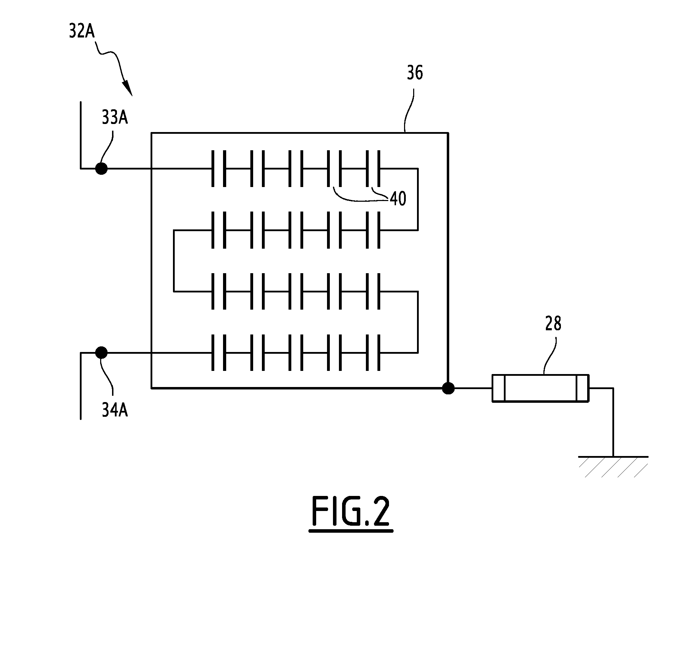

Comme illustré sur la figure 2, le premier module de supercondensateurs 32A comporte également vingt supercondensateurs 40 disposés dans l'enveloppe métallique 36 et reliés entre eux en série entre la borne d'entrée 33A et la borne de sortie 34A.

Les deuxième 32B et troisième modules 32C de supercondensateurs ont une structure identique à celle du premier module 32A ; celle-ci n'est donc pas décrite plus en détail par la suite.

En variante, chaque module de supercondensateurs 32A, 32B, 32C comporte un nombre N1 de supercondensateurs 40 reliés entre eux en série, N1 étant un nombre entier supérieur ou égal à deux.

La borne d'entrée 33A du premier module 32A est connectée à la borne d'entrée 20. La borne de sortie 34A du premier module 32A est connectée à la borne d'entrée 33B du deuxième module 32B. La borne de sortie 34B du deuxième module 32B est connectée à la borne d'entrée 33C du troisième module 32C. La borne de sortie 34C du troisième module 32C est connectée à la borne de sortie 22.

L'enveloppe métallique 36 de chaque module 32A, 32B, 32C définit un boîtier à l'intérieur duquel sont disposés les supercondensateurs 40. L'enveloppe métallique 36 de chaque module 32A, 32B, 32C est en outre isolée électriquement de la borne d'entrée et de la borne de sortie dudit module, ainsi que de l'enveloppe métallique 36 des modules adjacents. Par exemple, une couche d'un matériau isolant électriquement est disposée entre deux enveloppes métalliques 36 adjacentes. L'enveloppe métallique 36 de chaque module 32A, 32B, 32C est ainsi isolée électriquement de la carcasse métallique 24.

Le tapis isolant 38 recouvre toute la surface intérieure de l'enveloppe métallique 36. Le tapis isolant 38 est propre à isoler électriquement les supercondensateurs 40 de l'enveloppe métallique 36, comme connu en soi.

Chaque supercondensateur 40 est caractérisé par une capacité électrique de valeur comprise entre 1000 F et 10 000 F, par exemple égale à 3 000 F et par une tension d'utilisation de valeur par exemple égale à 2,7V.

Chaque fusible 28 est connecté entre d'une part l'enveloppe métallique 36 d'un module de supercondensateurs 32A, 32B, 32C, et d'autre part une masse électrique.

Chaque fusible 28 est caractérisé par une valeur calibre correspondant à une valeur maximum de l'intensité du courant admissible.

Chaque détecteur à tension de seuil 30 est connecté en parallèle d'un fusible 28 et se présente sous la forme d'une carte électronique, alimentée par une alimentation extérieure non représentée. Chaque détecteur à tension de seuil 30 comporte un organe 42 de détection d'une tension aux bornes du fusible 28. Il comporte en outre un organe de commutation à isolement galvanique 44, connecté électriquement à l'organe 42.

L'organe de détection 42 est propre à mesurer la tension aux bornes du fusible 28 correspondant et à générer un signal électrique, par exemple un courant constant, lorsque la tension qu'il mesure présente une valeur non nulle.

L'organe de commutation à isolement galvanique 44 comporte un interrupteur 45 et un actionneur 46, relié mécaniquement à l'interrupteur 45. Dans l'exemple de réalisation, l'organe de commutation à isolement galvanique 44 est un relai électromécanique et l'actionneur 46 est un électro-aimant.

L'organe de commutation à isolement galvanique 44 est propre à isoler électriquement l'électronique mise en oeuvre dans l'organe de mesure 42 de l'électronique de commande mise en oeuvre pour commander le disjoncteur 16.

L'interrupteur 45 est mobile entre une position d'ouverture et une position de fermeture. L'interrupteur 45 est propre à passer de sa position de fermeture à sa position d'ouverture, et vice versa, sous la commande mécanique de l'électro-aimant 46.

L'électro-aimant 46 est propre à commander l'ouverture ou la fermeture de l'interrupteur 45. Lorsqu'un courant circule au sein de l'électro-aimant 46, un champ magnétique se créé, déclenchant ainsi le déplacement d'un noyau de fer doux à l'intérieur de l'électro-aimant 46, et ouvrant mécaniquement l'interrupteur 45. Inversement, lorsqu'aucun courant ne circule au sein de l'électro-aimant 46, le noyau de fer doux se déplace jusqu'à une autre position, et ferme mécaniquement l'interrupteur 45.

En variante, l'organe de commutation à isolement galvanique 44 est un relais statique. L'actionneur 46 est alors un optocoupleur, relié par voie optique à l'interrupteur 45. L'interrupteur 45 est, selon cette variante, un composant seminconducteur dont l'état électrique est propre à passer d'un état bloqué à un état passant, et vice versa.

Chaque module de supercondensateurs 32A, 32B, 32C est associé à un interrupteur 45, les trois interrupteurs 45 étant connectés entre eux en série entre une source de tension constante 48 et le disjoncteur 16.

La source de tension constante 48 présente un potentiel électrique constant V₋ de valeur par exemple sensiblement égale à 0 V.

Chaque détecteur à tension de seuil 30 est avantageusement propre à être relié à une interface de restitution installée à demeure à bord du véhicule ferroviaire. Une fois généré par un organe 42, le signal électrique correspondant à la détection d'une tension est alors envoyé à ladite interface par le détecteur 30 correspondant. L'interface est alors à même de restituer visuellement à un utilisateur une information indiquant quel module de supercondensateurs présente un défaut d'isolation électrique.

Le disjoncteur 16 est propre à couper automatiquement le courant circulant dans le connecteur électrique 15, par exemple en cas de court-circuit entre les bornes d'entrée et de sortie de chaque module de supercondensateurs 32A, 32B, 32C, comme connu en soi.

Le disjoncteur 16 comporte un interrupteur 50 et un actionneur 52 relié mécaniquement à l'interrupteur 50 pour son actionnement, comme connu en soi.

L'interrupteur 50 est mobile entre une position d'ouverture et une position de fermeture du connecteur électrique 15. L'interrupteur 50 est propre à passer de sa position de fermeture à sa position d'ouverture, et vice versa, sous la commande mécanique de l'actionneur 52.

L'actionneur 52 est connecté électriquement entre l'interrupteur 45 correspondant au premier module de supercondensateurs 32A et une source de tension constante 54.

La source de tension constante 54 présente un potentiel électrique constant V₊ de valeur par exemple sensiblement égale à 24V. Les potentiels électriques V₋, respectivement V₊, présentés par les sources de tension 48, respectivement 54 sont différents, permettant ainsi la circulation d'un courant au sein de l'actionneur 52 et des interrupteurs 45.

L'actionneur 52 est propre à commander l'ouverture ou la fermeture de l'interrupteur 50, selon un principe analogue à celui expliqué précédemment pour l'électro-aimant 46 et l'interrupteur 45. Lorsqu'un courant circule au sein de l'actionneur 52, l'interrupteur 50 se ferme. Lorsqu'aucun courant ne circule au sein de l'actionneur 52, l'interrupteur 50 s'ouvre.

En variante, le système de stockage électrique 26 comporte un nombre N2 de modules de supercondensateurs reliés entre eux en série et / ou en parallèle, N2 étant un nombre entier supérieur ou égal à deux.

Le fonctionnement du système de stockage d'énergie 10 va désormais être expliqué.

On suppose pour la description que le système 10 est initialement en service, autrement dit qu'il est alimenté par le hacheur de tension 12 et que l'interrupteur 50 est fermé. Aucun courant ne circule dans les fusibles 28, et les tensions aux bornes desdits fusibles 28 présentent chacune une valeur nulle. Les interrupteurs 45 sont donc fermés et une tension constante Uc est appliquée sur l'actionneur 52 du disjoncteur 16, maintenant ainsi l'interrupteur 50 fermé.

La tension Uc est donnée par la formule : Uc = V₊ - V₋

En cas de défaillance de l'isolation interne d'un module de supercondensateurs 32A, 32B, 32C, pouvant par exemple être causée par un défaut d'usure sur un tapis isolant 38, un court-circuit apparaît entre l'enveloppe métallique 36 et la masse électrique. Du fait de l'apparition de ce court-circuit à la masse, un courant de court-circuit circule au sein du fusible 28 correspondant au module défectueux. Ce courant de court-circuit augmente, jusqu'à ce que son intensité atteigne la valeur calibre du fusible 28. Dès que cette valeur est dépassée, le fusible 28 s'ouvre, provoquant l'annulation de l'intensité du courant de court-circuit. La tension aux bornes du fusible 28, mesurée par l'organe 42 correspondant, présente alors une valeur non nulle. L'organe 42 génère un courant circulant au sein de l'électro-aimant 46 et l'interrupteur 45 correspondant s'ouvre. Le signal de tension constante Uc n'est alors plus appliqué sur l'actionneur 52, ce qui entraîne l'ouverture de l'interrupteur 50. Le système 10 n'est plus alimenté par le hacheur abaisseur de tension 12, permettant ainsi une intervention de maintenance de la part d'un opérateur.

Dans l'exemple particulier de réalisation selon lequel chaque détecteur à tension de seuil 30 est relié à une interface de restitution installée à demeure à bord du véhicule ferroviaire, l'opérateur chargé d'intervenir connait en outre l'identité du module de supercondensateurs défectueux.

On conçoit qu'une telle chaîne de stockage d'énergie 14 permet, en cas d'apparition d'un défaut d'isolation interne d'un des modules de supercondensateurs de la chaîne 14, de limiter le courant de court-circuit et donc l'élévation en température de la chaîne. Une telle chaîne de stockage d'énergie 14 permet ainsi d'éviter tout dégagement de gaz dangereux dans l'environnement immédiat des passagers du véhicule ferroviaire.

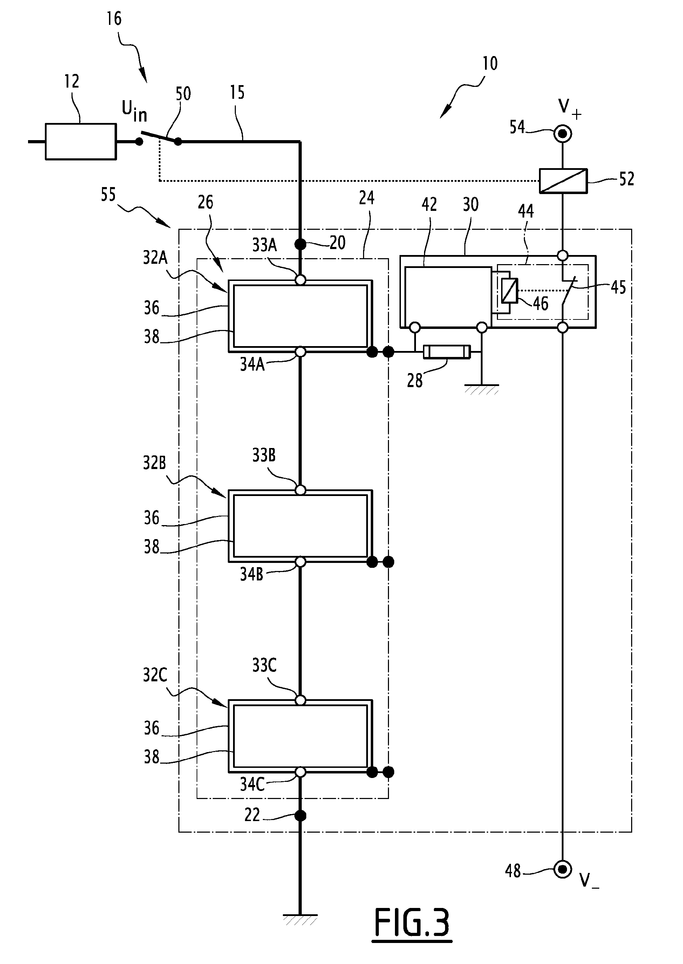

Par ailleurs la chaîne de stockage d'énergie 14 selon ce premier mode de réalisation est plus facile à construire mécaniquement, en comparaison avec le deuxième mode de réalisation décrit ci-après à l'aide de la figure 3.

Une deuxième chaîne de stockage d'énergie 55 selon l'invention est représentée sur la figure 3. Sur cette figure, les éléments analogues au premier mode de réalisation décrit précédemment sont repérés par des références identiques.

Selon ce deuxième mode de réalisation, la chaîne de stockage d'énergie 55 comporte un fusible 28 et un détecteur à tension de seuil 30, connecté en parallèle du fusible 28 et relié au disjoncteur 16.

Par ailleurs, le fusible 28 est connecté entre d'une part la carcasse métallique 24, et d'autre part une masse électrique. L'enveloppe métallique 36 de chaque module 32A, 32B, 32C est en outre reliée électriquement à la carcasse métallique 24.

La chaîne de stockage d'énergie 55 selon ce deuxième mode de réalisation correspond à l'association de tous les modules 32A, 32B, 32C à un fusible 28 et à un détecteur à tension de seuil 30.

En variante, l'homme du métier comprendra qu'on peut de la même façon constituer N3 sous-groupes de modules, chaque sous-groupe étant associé à un fusible 28 et à un détecteur à tension de seuil 30, N3 étant un nombre entier supérieur ou égal à deux et inférieur au nombre total de modules.

La connexion avantageuse du détecteur à tension de seuil 30 à une interface de restitution installée à demeure à bord du véhicule ferroviaire n'est pas envisagée selon ce mode de réalisation, les avantages liés à cette connexion étant ici inexistants.

Le fonctionnement de la chaîne de stockage d'énergie 55 va maintenant être décrit.

En cas de défaillance de l'isolation interne d'un module de supercondensateurs 32A, 32B, 32C, un court-circuit apparaît entre l'enveloppe métallique 36 et la carcasse métallique 24. Du fait de l'apparition de ce court-circuit, un courant de court-circuit circule au sein du fusible 28. La suite du fonctionnement de la chaîne de stockage d'énergie 55 est identique à celle de la chaîne de stockage d'énergie 14, et n'est donc pas décrite plus en détail.

Par comparaison avec la chaîne de stockage d'énergie 14 selon le premier mode de réalisation, la chaîne de stockage d'énergie selon ce mode de réalisation occupe un espace plus restreint au sein du système de stockage d'énergie 10, ce qui permet de réduire sensiblement les coûts de fabrication.

Les autres avantages de ce deuxième mode de réalisation, concernant la chaîne de stockage d'énergie, sont identiques à ceux du premier mode de réalisation, et ne sont donc pas décrits à nouveau.

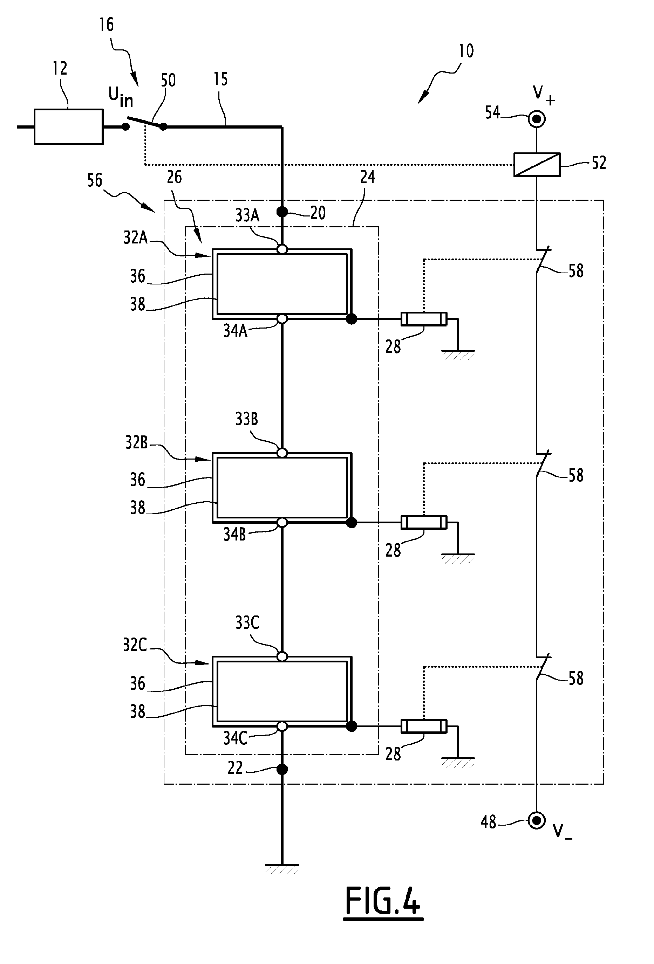

Une troisième chaîne de stockage d'énergie 56 selon l'invention est représentée sur la figure 4. Sur cette figure, les éléments analogues au premier mode de réalisation décrit précédemment sont repérés par des références identiques.

Selon ce troisième mode de réalisation, chaque fusible 28 est un fusible à percuteur.

En outre, chaque détecteur à tension de seuil 30 est remplacé par un interrupteur 58, relié mécaniquement à un fusible à percuteur 28.

Chaque module de supercondensateurs 32A, 32B, 32C est associé à un interrupteur 58, les trois interrupteurs 58 étant connectés entre eux en série entre la source de tension constante 48 et l'actionneur 52.

L'actionneur 52 est connecté électriquement entre l'interrupteur 58 correspondant au premier module de supercondensateurs 32A et la source de tension constante 54.

Chaque fusible à percuteur 28 est propre, lorsque le courant qui le traverse atteint la valeur calibre du fusible, à s'ouvrir et à percuter mécaniquement, lors de cette ouverture, l'interrupteur 58 auquel il est relié.

Chaque interrupteur 58 est mobile entre une position de fermeture et une position d'ouverture et est propre, sous l'effet d'une percussion mécanique, à passer de sa position de fermeture à sa position d'ouverture.

Le fonctionnement de la chaîne de stockage d'énergie 56 va désormais être expliqué.

Initialement, le système 10 est en service, l'interrupteur 50 et les interrupteurs 58 sont fermés.

Lorsqu'un court-circuit à la masse apparaît au sein d'un des modules de supercondensateurs 32A, 32B, 32C, un courant de court-circuit circule au sein du fusible à percuteur 28 correspondant au module défectueux. Ce courant de court-circuit augmente, jusqu'à ce que son intensité atteigne la valeur calibre du fusible à percuteur 28. Dès que cette valeur est dépassée, le fusible à percuteur 28 s'ouvre, provoquant l'annulation de l'intensité du courant de court-circuit. Le fusible à percuteur 28 percute mécaniquement l'interrupteur 58 auquel il est relié, provoquant l'ouverture dudit interrupteur.

Le signal de tension constante Uc n'est alors plus appliqué sur l'actionneur 52, ce qui entraîne l'ouverture de l'interrupteur 50.

La détection d'un défaut d'isolation interne au sein d'un des modules de supercondensateurs étant effectuée par voie entièrement mécanique dans ce troisième mode de réalisation de l'invention, celui-ci présente l'avantage d'améliorer la fiabilité de la détection, par rapport au premier mode de réalisation décrit précédemment, dans lequel la détection est effectuée par voies électronique et mécanique combinées.

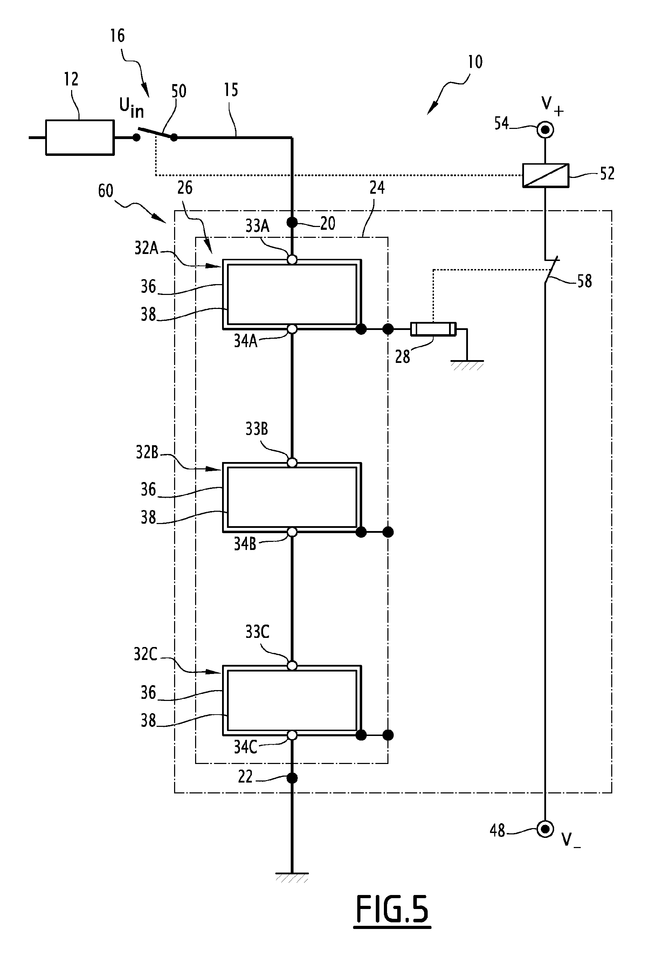

Une quatrième chaîne de stockage d'énergie 60 selon l'invention est représentée sur la figure 5. Sur cette figure, les éléments analogues au troisième mode de réalisation décrit précédemment sont repérés par des références identiques.

Selon ce quatrième mode de réalisation, la chaîne de stockage d'énergie 60 comporte un fusible à percuteur 28 et un interrupteur 58, relié mécaniquement au fusible à percuteur 28, et connecté électriquement entre la source de tension constante 48 et l'actionneur 52.

Par ailleurs, le fusible à percuteur 28 est connecté entre d'une part la carcasse métallique 24, et d'autre part une masse électrique. L'enveloppe métallique 36 de chaque module 32A, 32B, 32C est en outre reliée électriquement à la carcasse métallique 24.

Le fonctionnement de la chaîne de stockage d'énergie 60 va maintenant être décrit.

En cas de défaillance de l'isolation interne d'un module de supercondensateurs 32A, 32B, 32C, un court-circuit apparaît entre l'enveloppe métallique 36 et la carcasse métallique 24. Du fait de l'apparition de ce court-circuit, un courant de court-circuit circule au sein du fusible à percuteur 28. La suite du fonctionnement de la chaîne de stockage d'énergie 60 est identique à celle de la chaîne de stockage d'énergie 56, et n'est donc pas décrite plus en détail.

Les avantages de ce quatrième mode de réalisation, concernant la chaîne de stockage d'énergie, sont identiques à ceux du deuxième mode de réalisation et du troisième mode de réalisation, et ne sont donc pas décrits à nouveau.

On conçoit ainsi que la chaîne de stockage d'énergie selon l'invention permet, en cas d'apparition d'un défaut d'isolation interne d'un des modules de supercondensateurs de la chaîne, de limiter le courant de court-circuit et l'élévation en température de la chaîne consécutive.

## Revendications

1. Chaîne de stockage d'énergie (14 ; 55 ; 56 ; 60) pour véhicule, du type comprenant :
- une carcasse métallique (24),
- un système de stockage électrique (26) fixé mécaniquement dans la carcasse métallique (24), et comprenant au moins un module de supercondensateurs (32A, 33A, 34A), le ou chaque module (32A, 33A, 34A) comportant une enveloppe métallique (36) et une pluralité de supercondensateurs (40) reliés entre eux en série et disposés dans l'enveloppe métallique (36),
- au moins un dispositif de protection électrique (28) propre à ouvrir un circuit électrique,
**caractérisée en ce que** le dispositif de protection électrique (28) relie à une masse électrique un élément parmi la carcasse métallique (24) ou le module de supercondensateurs (32A, 33A, 34A).

2. Chaîne de stockage d'énergie (14; 55; 56; 60) selon la revendication 1, **caractérisée en ce que** le système de stockage électrique (26) comporte au moins deux modules de supercondensateurs (32A, 33A, 34A) connectés en série.

3. Chaîne de stockage d'énergie (14 ; 55 ; 56 ; 60) selon la revendication 1 ou 2, **caractérisée en ce que** le ou chaque dispositif de protection électrique (28) comporte un fusible.

4. Chaîne de stockage d'énergie (14 ; 55 ; 56 ; 60) selon la revendication 3, **caractérisée en ce qu'**elle comporte en outre au moins un organe (30 ; 58) de détection d'ouverture de circuit électrique.

5. Chaîne de stockage d'énergie (14 ; 55) selon la revendication 4, **caractérisée en ce que** le ou chaque organe de détection d'ouverture de circuit électrique comporte un détecteur à tension de seuil (30), connecté électriquement en parallèle d'un fusible (28).

6. Chaîne de stockage d'énergie (14 ; 55) selon la revendication 5, **caractérisée en ce que** le ou chaque détecteur à tension de seuil (30) comporte un organe de commutation à isolement galvanique (44).

7. Chaîne de stockage d'énergie (56 ; 60) selon la revendication 4, **caractérisée en ce que** le ou chaque fusible (28) est un fusible à percuteur et **en ce que** le ou chaque organe de détection d'ouverture de circuit électrique comporte un interrupteur (58), ledit interrupteur (58) étant relié mécaniquement à un fusible à percuteur (28).

8. Système de stockage d'énergie (10) pour véhicule, du type comprenant une chaîne de stockage d'énergie (14 ; 55 ; 56 ; 60) et un organe de sectionnement haute tension (16) relié à la chaîne (14 ; 55 ; 56 ; 60), **caractérisé en ce que** la chaîne de stockage d'énergie (14 ; 55 ; 56 ; 60) est conforme à l'une quelconque des revendications 1 à 7.

9. Véhicule ferroviaire **caractérisé en ce qu'**il comprend un système de stockage d'énergie (10) selon la revendication 8.

## Patentansprüche

1. Energiespeicherkette (14, 55, 56, 60) eines Fahrzeugs, umfassend:
- ein Metallgehäuse (24),
- ein Stromspeichersystem (26), das im Metallgehäuse (24) mechanisch befestigt ist und mindestens ein Supercapmodul (32A, 33A, 34A) umfasst, wobei das/jedes Modul (32A, 33A, 34A) eine Metallhülle (36) und eine Mehrzahl miteinander reihengeschalteter Supercaps (40) aufweist, die in der Metallhülle (36) angeordnet sind;
- mindestens eine Elektrikschutzvorrichtung (28), die zur Eröffnung einer elektrischen Schaltung geeignet ist,
**dadurch gekennzeichnet, dass** die Elektrikschutzvorrichtung (28) entweder das Metallgehäuse (24) oder das Supercapmodul (32A, 33A, 34A) mit einer elektrischen Masse verbindet.

2. Energiespeicherkette (14, 55, 56, 60) nach Anspruch 1, **dadurch gekennzeichnet, dass** das Energiespeichersystem (26) mindestens zwei reihengeschaltete Supercapmodule (32A, 33A, 34A) aufweist.

3. Energiespeicherkette (14, 55, 56, 60) nach Anspruch 1 oder 2, **dadurch gekennzeichnet, dass** die bzw. jede Elektrikschutzvorrichtung (28) eine Sicherung aufweist.

4. Energiespeicherkette (14, 55, 56, 60) nach Anspruch 3, **dadurch gekennzeichnet, dass** sie ferner mindestens ein Element (38, 58) zur Erkennung der Eröffnung einer elektrischen Schaltung aufweist.

5. Energiespeicherkette (14, 55) nach Anspruch 4, **dadurch gekennzeichnet, dass** das/jedes Element zur Erkennung der Eröffnung einer elektrischen Schaltung einen Schwellenspannungsdetektor (30) aufweist, der mit einer Sicherhung (28) elektrisch parallelgeschaltet ist.

6. Energiespeicherkette (14, 55) nach Anspruch 5, **dadurch gekennzeichnet, dass** der/jeder Schwellenspannungsdetektor (30) einen galvanisch isolierten Schalter (44) aufweist.

7. Energiespeicherkette (56, 60) nach Anspruch 4, **dadurch gekennzeichnet, dass** die/jede Sicherung (28) eine Schlagstiftsicherung ist, und dass jedes Element zur Erkennung der Eröffnung einer elektrischen Schaltung (58) einen Schalter (58) aufweist, welcher mechanisch mit einer Schlagstiftsicherung (28) verbunden ist.

8. Energiespeichersystem (10) für ein Fahrzeug, umfassend eine Energiespeicherkette (14, 55, 56, 60) und eine mit der Kette (14, 55, 56, 60) verbundene Hochspannungs-Trennvorrichtung (16), **dadurch gekennzeichnet, dass** die Energiespeicherkette (14, 55, 56, 60) einem der Ansprüche 1 - 7 entspricht.

9. Schienenfahrzeug, **dadurch gekennzeichnet, dass** es ein Energiespeichersystem (10) nach Anspruch 8 umfasst.

## Claims

1. Energy storage chain (14; 55; 56; 60) for a vehicle, of the type comprising:
- a metal carcass (24),
- an electric storage system (26) mechanically attached in the metal carcass (24), and comprising at least a one module of supercapacitors (32A, 33A, 34A), said or each module (32A, 33A, 34A) including a metal casing (36) and a plurality of supercapacitors (40) connected together in series and positioned in the metal casing (36),
- at least one electric protection device (28) able to open an electric circuit,
**characterized in that** the electric protection device (28) connects to electrical ground an element from among the metal carcass (24) or the module of supercapacitors (32A, 33A, 34A).

2. The energy storage chain (14; 55; 56; 60) according to claim 1, characterizing that the electric storage system (26) includes at least two modules of supercapacitors (32A, 33A, 34A) connected in series.

3. The energy storage chain (14; 55; 56; 60) according to claim 1 or 2, **characterized in that** said or each electric protection device (28) includes a fuse.

4. The energy storage chain (14; 55; 56; 60) according to claim 3, **characterized in that** it further includes at least one member (30; 58) for detecting opening of an electric circuit.

5. The energy storage chain (14; 55) according to claim 4, **characterized in that** said or each member for detecting opening of an electric circuit includes a threshold voltage detector (30), electrically connected in parallel to a fuse (28).

6. The energy storage chain (14; 55) according to claim 5, characterizing that said or each threshold voltage detector (30) includes a switching member with galvanic insulation (44).

7. The energy storage chain (14; 55) according to claim 4, **characterized in that** said or each fuse (28) is a striker pin fuse and **in that** said or each member for detecting opening of an electric circuit includes a switch (58), said switch (58) being mechanically connected to a striker pin fuse (28).

8. An energy storage system (10) for a vehicle, of the type comprising an energy storage chain (14; 55; 56; 60) and a high voltage severing member (16) connected to the chain (14; 55; 56; 60), **characterized in that** the energy storage chain (14; 55; 56; 60) is according to any of claims 1 to 7.

9. A railway vehicle, **characterized in that** it comprises an energy storage system (10) according to claim 8.
